# EUROPÄISCHE PATENTSCHRIFT

(11) **EP 1 030 064 B1**
(45) Veröffentlichungstag und Bekanntmachung des Hinweises auf die Patenterteilung: **27.10.2004**
(21) Anmeldenummer: 00102019.7
(22) Anmeldetag: 02.02.2000
(51) Int. Cl.: F15B 5/00

(54) **Druckschalter**
Pressure switch
Interrupteur de pression

(30) Priorität: 18.02.1999 DE 19906639
(43) Veröffentlichungstag der Anmeldung: 23.08.2000
(73) Patentinhaber: FESTO AG & Co, 73734 Esslingen (DE)
(72) Erfinder: Wagner, Dietmar, 73230 Kirchheim/Teck (DE); Franz, Jochen, 72762 Reutlingen (DE)
(74) Vertreter: Vetter, Hans, Dipl.-Phys. Dr.

(56) Entgegenhaltungen:
- EP-A- 0 302 158
- WO-A-98/50246
- US-A- 4 977 509
- US-A- 5 182 826
- US-A- 5 361 218
- US-A- 5 617 515
- US-A- 5 666 815

## Beschreibung

Die Erfindung betrifft einen Druckschalter mit einem Druckanschluß, mit einem elektrischen Drucksensor zur Erbeugung eines druckabhängigen elektrischen Signals, mit einer Bedienungs- und/oder Einstelleinrichtung zur Vorgabe wenigstens einer Druckschaltschwelle und mit wenigstens einem elektrischen Schaltausgang.

Eine Schaltung zur Meßwerkkorrelatur bei Druckaufnehmen ist z.B. dem Dokument US-A-5361218 zu entnehmen.

Bei bekannten Druckschaltern wird der gewünschte Schaltdruck beispielsweise mittels einer Einstellschraube oder eines Einstellpotentiometers eingestellt. Aufwendigere bekannte Lösungen besitzen Bedientasten und ein Anzeige-Display, wobei mittels der Bedientasten der gewünschte Schaltdruck programmiert werden kann, indem beispielsweise der gewünschte Druckwert als Zahlenwert eingegeben wird. Bei diesen bekannten Druckschaltern ist jedoch die Vorgabe des Schaltdrucks generell umständlich und aufwendig durchzuführen.

Eine Aufgabe der vorliegenden Erfindung besteht darin, einen Druckschalter zu schaffen, bei dem der gewünschte Schaltdruck in einfacher und dennoch variabler Weise vorgegeben werden kann.

Diese Aufgabe wird erfindungsgemäß dadurch gelöst, daß der Druckschalter durch Betätigung der Bedienungseinrichtung derart einstellbar ist, daß das einem augenblicklich anliegenden Druck entsprechende elektrische Signal als erster Druckspeicherwert und das einem zeitlich danach anliegenden Druck entsprechende elektrische Signal als zweiter Druckspeicherwert gespeichert wird, wobei diese beiden Druckspeicherwerte den oder die Druckschaltschwellen im Arbeitsbetrieb vorgeben.

Beim erfindungsgemäßen Druckschalter kann ein Druckspeicherwert beispielsweise durch Betätigung einer Bedienungstaste oder einer Bedienungstastenkombination schnell und einfach eingespeichert werden. Die Eingabe eines Zahlenwerts oder die Einstellung einer Einstellschraube oder eines Potentiometers ist nicht mehr erforderlich. Der jeweils anliegende Druck wird dabei als Druckspeicherwert übernommen. Dabei erweist es sich als besonders vorteilhaft, zwei zeitlich hintereinander anliegende Drücke als Druckspeicherwerte zu übernehmen, um Druckschaltschwellen in besonders variabler Weise vorgeben zu können.

Durch die in den Unteransprüchen aufgeführten Maßnahmen sind vorteilhafte Weiterbildungen und Verbesserungen des im Anspruch 1 angegebenen Druckschalters möglich.

Die Druckspeicherwerte können zweckmäßigerweise durch wiederholte Betätigung der Bedienungstaste oder einer Bedienungstastenkombination eingespeichert werden. Als besonders günstig hat es sich dabei erwiesen, daß nach erstmaliger Betätigung eine Aufforderung zur nochmaligen Betätigung auf einem Display oder durch ein akutisches und/oder optisches Signal, insbesondere das einer Leuchtdiode, ergeht. Hierdurch wird die Bedienungsperson daran erinnert, daß eine nochmalige Betätigung vorgesehen ist.

Alternativ hierzu kann die Einspeicherung auch durch einmalige Betätigung erfolgen, wobei dann nach einer vorgebbaren Zeit der dann anliegende Druck als zweiter Speicherwert übernommen wird.

Die Bedienungstastenkombination besteht zweckmäßigerweise aus einer dem Schaltausgang zugeordneten Bedienungstaste und einer Programmiertaste, die in den meisten Fällen ohnehin erforderlich ist, so daß keine zusätzlichen Tasten benötigt werden.

Zur Erzielung einer größeren Variabilität und von variableren Einsatzmöglichkeiten weist der Druckschalter vorzugsweise mehrere voneinander unabhängige Schaltausgänge auf, für die jeweils zwei Druckspeicherwerte zur Speicherung vorgesehen sind. Dabei ist jedem Schaltausgang zweckmäßigerweise eine Bedienungstaste zugeordnet.

Neben ihrer Funktion zur Speicherung der Druckspeicherwerte ist die Bedienungstaste jeweils in vorteilhafter Weise auch zur Auslösung der Anzeige bzw. Wiedergabe des Wertes der Schaltschwellen(n) des zugeordneten Schaltausgangs mittels eines Displays oder eines optischen und/oder akustischen Signals, insbesondere einer Leuchtdiode, ausgebildet, wobei insbesondere unterschiedliche Betätigungsarten oder unterschiedliche Betätigungskombinationen mit anderen Bedienungstasten die unterschiedlichen Funktionen der Speicherung und der Anzeige auslösen. Derartige unterschiedliche Betätigungsarten können beispielsweise darin bestehen, daß die jeweilige Bedienungstaste unterschiedlich lange oder unterschiedlich oft hintereinander betätigt wird.

Zur Vorgabe von unterschiedlichen Betriebsarten in Abhängigkeit der gespeicherten Druckspeicherwerte ist in vorteilhafter Weise wenigstens eine Einstell- und/oder Programmtaste vorgesehen. Der Druckschalter kann hierdurch in sehr variabler Weise eingesetzt werden. Vorzugsweise ist in einer Betriebsart als Schwellwertschalter der Mittelwert der gespeicherten Druckspeicherwerte als Schaltschwelle vorgebbar. In einer weiteren Betriebsart als Hystereseschalter sind die beiden gespeicherten Druckspeicherwerte als Einschalt- und Ausschaltschwelle vorgebbbar. In einer wiederum weiteren Betriebsart als Fensterkomparator sind die beiden gespeicherten Druckspeicherwerte als Einschalt- und Ausschaltschwellen für das Schaltfenster vorgebbar. Damit können zunächst drei unterschiedliche Betriebsarten eingestellt werden. Wenn zusätlich für die Schaltausgänge wahlweise eine Umschaltung zwischen Öffner-Betrieb und Schließer-Betrieb vorgesehen ist, sind insgesamt sechs verschiedene Betriebsarten einstellbar, die alle von den beiden gespeicherten Druckspeicherwerten abhängen.

Zur Vorgabe der gewünschten Betriebsart eignet sich eine Menüführung auf einem Display.

Ein Ausführungsbeispiel der Erfindung ist in der Zeichnung dargestellt und in der nachfolgenden Beschreibung näher erläutert. Es zeigen:
- Fig. 1: eine Außenansicht eines Ausführungsbeispiels für einen Druckschalter auf der Bedienungsseite,
- Fig. 2: ein Flußdiagramm zur Erläuterung der Wirkungsweise,
- Fig. 3: ein Diagramm zur Erläuterung der Betriebsart als Schwellwertschalter,
- Fig. 4: ein Diagramm zur Erläuterung der Betriebsart als Hystereseschalter und
- Fig. 5: ein Diagramm zur Erläuterung der Betriebsart als Fensterkomparator.

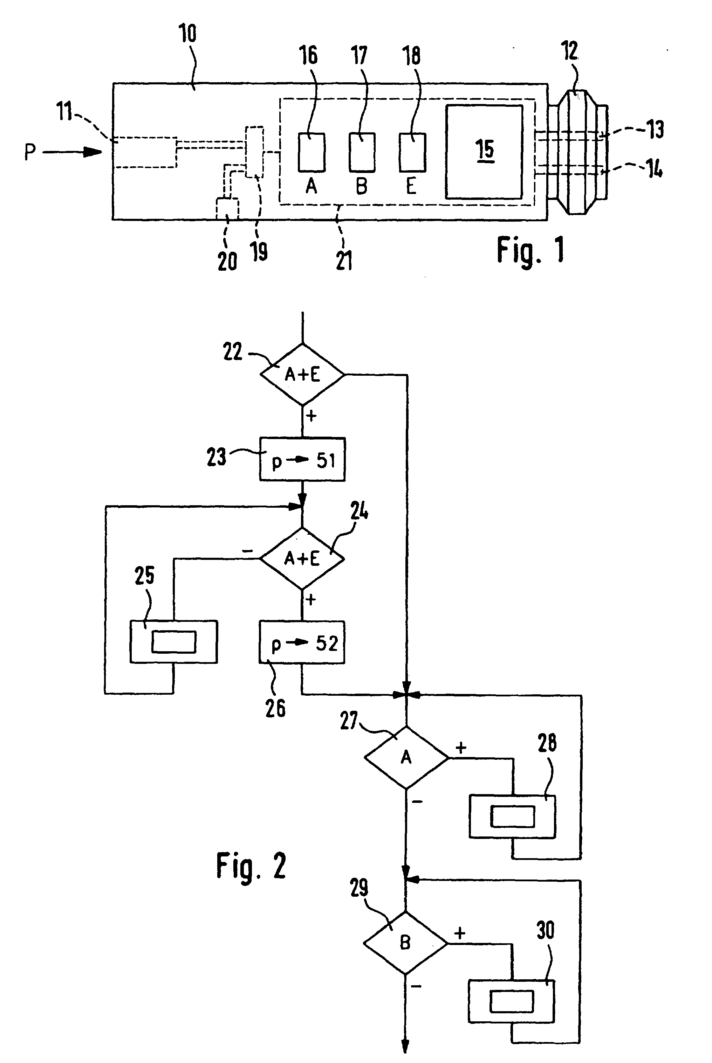

Der in Fig. 1 dargestellte Druckschalter besitzt ein Gehäuse 10 mit rundem oder rechteckigem Querschnitt, bei dem an der einen Stirnseite ein Druckanschluß 11 für eine zu Druckleitung und an der gegenüberliegenden Stirnseite eine elektrische Anschlußeinrichtung 12 mit zwei als Kontakte ausgebildeten Schaltausgängen 13, 14 angeordnet ist. An der Seiten- bzw. Umfangswandung des Gehäuses 10 sind ein Display 15 sowie drei Bedienungstasten 16 - 18 angeordnet. Dabei ist die Bedienungstaste 16 (A) dem Schaltausgang 13 und die Bedienungstaste 17 (B) dem Schaltausgang 14 zugeordnet. Die Bedienungstaste 18 (E) ist als Programmier- bzw. Editiertaste ausgebildet.

Im Inneren des Gehäuses 10 ist ein Drucksensor 19 angeordnet, der zum einen mit dem Druckanschluß 11 und zum anderen mit einer Außenluftöffnung 20 verbunden ist. Das druckabhängige elektrische Ausgangssignal des Drucksensors 19 ist einer elektronischen Auswerteeinrichtung 21 zugeführt, die mit den Bedienungstasten 16 - 18, dem Display 15 sowie den Schaltausgängen 13, 14 verbunden ist. In dieser elektrischen Auswerteeinrichtung 21 ist beispielsweise ein Mikroprozessor bzw. Mikrocomputer angeordnet. Die Stromversorgung kann entweder in nicht dargestellter Weise über die elektrische Anschlußeinrichtung 12 erfolgen, oder es ist eine elektrische Versorgungsbatterie vorgesehen.

Die Wirkungsweise dieses Druckschalters wird im folgenden anhand von Fig. 2 erläutert. Das Wesentliche an der Wirkungsweise besteht darin, daß zwei Druckspeicherwerte in einer Speichereinrichtung der Auswerteeinrichtung 21 dadurch eingespeichert werden, daß das dem jeweils anliegenden Druckwert p entsprechende elektrische Signal gespeichert wird, wenn ein entsprechender Tastenbefehl erfolgt. Die Einspeicherung der Druckspeicherwerte für den Schaltausgang 13 erfolgt bei gleichzeitiger Betätigung der Bedienungstasten 16 und 18, und die Druckspeicherwerte für den Schaltausgang 14 werden bei gleichzeitiger Betätigung der Bedienungstasten 17 und 18 gespeichert.

Im einzelnen erfolgt die Speicherung der Druckspeicherwerte wie folgt: Im Programmablauf der Auswerteeinrichtung 21 erfolgt zyklisch eine Abfrage 22, ob gleichzeitig die Bedienungstasten 16 und 18 bzw. A und E betätigt werden. Ist dies der Fall, so wird ein erster Druckspeicherwert S1 im Speichervorgang 23 abgespeichert, der dem zu dieser Zeit anliegenden Druckwert p entspricht. Danach erfolgt eine Abfrage 24, ob diese Tastenkombination nochmals betätigt wird. Dabei erfolgt auf dem Display 15 eine Display-Aufforderung 25, diese Tastenkombination nochmals zu betätigen. Erfolgt diese nochmalige Betätigung, dann wird der zu diesem Zeitpunkt anliegende Druckwert p im Speichervorgang 26 als Druckspeicherwert S2 abgespeichert.

In Fig. 2 ist lediglich die Speicherung der beiden Druckspeicherwerte S1 und S2 beschrieben, die dem Schaltausgang 13 zugeordnet sind. Die Speicherung von zwei Druckspeicherwerten für den Schaltausgang 14 erfolgt in derselben Weise, wobei hierzu eine gleichzeitige Betätigung jeweils der Tasten 17 und 18 bzw. B und E erforderlich ist.

Nach dem Speichervorgang der Druckspeicherwerte geht der Programmablauf wieder in den normalen Arbeitsbetrieb zurück. Die Bedienungstasten 16 und 17 haben eine Doppelfunktion. Wird im Arbeitsbetrieb mittels einer Abfrage 27 die Betätigung der Bedienungstaste 16 bzw. A festgestellt, so wird durch einen Wiedergabevorgang 28 auf dem Display 15 angezeigt, welche Werte für Schaltschwellen bzw. Hysterese aktuell eingestellt sind.

Entsprechend können durch Betätigung der Bedienungstaste 17 bzw. B durch eine Abfrage 29 die Einstellungen des Schaltausgangs 14 abgefragt und entsprechend durch einen Wiedergabevorgang 30 auf dem Display angezeigt werden.

In Abwandlung des dargestellten Ausführungsbeispiels kann anstelle des Displays 15 bei einer einfacheren Ausführung eine Leuchtdiode treten. Die Aufforderung zu einer nochmaligen Betätigung der Tastenkombination zur Eingabe des zweiten Druckspeicherwerts kann dann beispielsweise durch blinkenden Betrieb der Leuchtdiode wiedergegeben werden. Alternativ oder zusätzlich kann auch ein akustisches Signal treten. Entsprechend kann zur Abfrage der Schalteinstellungen des Schaltausgangs 13 oder des Schaltausgangs 14 durch Betätigung der Bedienungstaste 16 oder der Bedienungstaste 17 die Leuchtdiode je nach Schaltzustand aufleuchten oder nicht aufleuchten, wobei auch hier prinzipiell ein akustisches Signal vorgesehen sein kann.

In einer weiteren einfacheren Ausführung kann auch nur ein Schaltausgang vorgesehen sein, wobei prinzipiell auch eine die Zahl zwei übersteigende Anzahl von Schaltausgängen vorgesehen sein kann. Hierzu sollte dann die Zahl der Bedienungstasten entsprechend erhöht werden.

Anstelle der Betätigung einer Tastenkombination zur Einspeicherung von Druckspeicherwerten kann dies beispielsweise auch lediglich mit der zugeordneten Bedienungstaste 16 bzw. 17 dadurch erfolgen, daß diesen Bedienungstasten unterschiedliche Bedienungsarten zugeordnet werden. Beispielsweise kann eine kurze Betätigung zur Abfrage der Schalteinstellungen des entsprechenden Schaltausgangs dienen, während eine längere Betätigung zur Speicherung der Druckspeicherwerte dient. Auch Mehrfachbetätigungen einer Taste kurz hintereinander können zur Realisierung von unterschiedlichen Bedienungsfunktionen dienen.

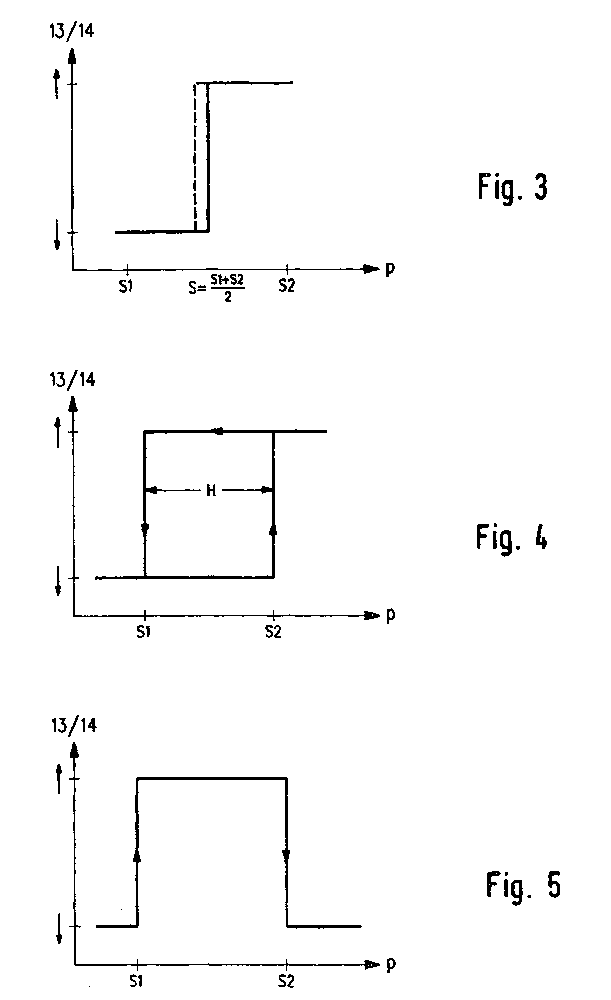

Die beiden gespeicherten Druckspeicherwerte (pro Schaltausgang 13, 14) können nun für die unterschiedlichen Betriebsarten des Druckschalters unterschiedlich verwendet werden. Dies ist in den Fig. 3 bis 5 näher erläutert. Die Einstellung der jeweiligen Betriebsart erfolgt entweder menügeführt über das Display 15 mit Hilfe der Bedienungstasten 16 - 18, oder es sind hierzu weitere, nicht dargestellte Bedienungstasten oder Bedienungsschalter vorgesehen.

In Fig. 3 ist als erste Betriebsart die eines Schwellwertschalters dargestellt. Aus den beiden gespeicherten Druckspeicherwerten S1 und S2 wird in der Auswerteeinrichtung 21 automatisch der Mittelwert gebildet und als Schaltschwelle vorgegeben, wobei dieser Schaltschwelle automatisch eine Hysterese zugeordnet werden kann. Dabei können wiederum alternativ die entsprechenden Schaltausgänge als Schließer oder Öffner programmiert werden, wobei im einen Falle die Schaltausgänge bei Erreichen des Schwellwerts geöffnet und im anderen Falle geschlossen werden. Die beiden unterschiedlichen Druckspeicherwerte können beispielsweise dadurch erzeugt werden, daß nach der Speicherung des ersten Druckspeicherwerts eine gezielte Leckage erzeugt wird. Falls nur ein Druckspeicherwert gespeichert werden soll, so wird durch zweimalige Betätigung der Tastenkombination eben zweimal derselbe Druckspeicherwert eingespeichert.

In Fig. 4 ist die Betriebsart als Hystereseschalter dargestellt, bei der der größere Druckspeicherwert S2 als Hochschaltschwelle und der kleinere Druckspeicherwert S1 als Rückschaltschwelle festgelegt wird. Dadurch können beliebige Hysteresen H gezielt erzeugt werden. Auch hier kann selbstverständlich wiederum zwischen den beiden Alternativen Öffner und Schließer gewählt werden, was zu einer Invertierung der entsprechenden Schaltausgänge führt.

Schließlich ist in Fig. 5 die Betriebsart als Fensterkomparator dargestellt, bei der der kleinere Druckspeicherwert S1 als Hochschaltschwelle und der größere Druckspeicherwert S2 als Rückschaltschwelle festgelegt wird. Auch ist wiederum wahlweise eine Invertierung möglich.

Insgesamt sind somit unter Berücksichtigung der Möglichkeit einer Invertierung sechs verschiedene Betriebsarten einstellbar, wobei prinzipiell auch noch weitere Betriebsarten denkbar sind.

## Patentansprüche

1. Druckschalter mit einem Druckanschluß, mit einem elektrischen Drucksensor zur Erzeugung eines druckabhängigen elektrischen Signals, mit einer Bedienungsund/oder Einstelleinrichtung zur Vorgabe wenigstens einer Druckschaltschwelle und mit wenigstens einem elektrischen Schaltausgang, **dadurch gekennzeichnet, daß** der Druckschalter durch Betätigung der Bedienungseinrichtung (16 - 18) derart einstellbar ist, daß das einem augenblicklich anliegenden Druck (p) entsprechende elektrische Signal als erster Druckspeicherwert (S1) und das einem zeitlich danach anliegenden Druck (p) entsprechende elektrische Signal als zweiter Druckspeicherwert (S2) gespeichert wird, wobei diese beiden Druckspeicherwerte (S1, S2) den oder die Druckschaltschwellen im Arbeitsbetrieb vorgeben.

2. Druckschalter nach Anspruch 1, **dadurch gekennzeichnet, daß** zur Speicherung der Druckspeicherwerte (S1, S2) eine Bedienungstaste (16 bzw. 17) oder Bedienungstastenkombination (16 und 18 bzw. 17 und 18) vorgesehen ist.

3. Druckschalter nach Anspruch 2, **dadurch gekennzeichnet, daß** die Druckspeicherwerte (S1, S2) durch wiederholte Betätigung der Bedienungstasten (16, 17) oder Bedienungstastenkombinationen (16, 18; 17, 18) speicherbar sind.

4. Druckschalter nach Anspruch 3, **dadurch gekennzeichnet, daß** nach erstmaliger Betätigung eine Aufforderung (25) zur nochmaligen Betätigung auf einem Display (15) oder durch ein akutisches und/oder optisches Signal, insbesondere das einer Leuchtdiode, ergeht.

5. Druckschalter nach einem der Ansprüche 2 bis 4, **dadurch gekennzeichnet, daß** die Bedienungstastenkombination aus einer dem jeweiligen Schaltausgang zugeordneten Bedienungstaste (16 bzw. 17) und einer Programmiertaste (18) besteht.

6. Druckschalter nach einem der vorhergehenden Ansprüche, **dadurch gekennzeichnet, daß** er mehrere voneinander unabhängige Schaltausgänge (13, 14) aufweist, für die jeweils zwei Druckspeicherwerte (S1, S2) zur Speicherung vorgesehen sind.

7. Druckschalter nach Anspruch 5, **dadurch gekennzeichnet, daß** jedem Schaltausgang (13, 14) wenigstens eine Bedienungstaste (16, 17) zugeordnet ist.

8. Druckschalter nach einem der Ansprüche 2 bis 7, **dadurch gekennzeichnet, daß** die Bedienungstasten (16, 17) auch zur Auslösung der Anzeige/Wiedergabe (28, 30) des Wertes der Schaltschwelle(n) des zugeordneten Schaltausgangs (13, 4) mittels eines Displays (15) oder eines optischen und/oder akustischen Signals, insbesondere einer Leuchtdiode, ausgebildet ist, wobei insbesondere unterschiedliche Betätigungsarten oder unterschiedliche Betätigungskombinationen mit anderen Bedienungstasten die unterschiedlichen Funktionen der Speicherung und der Anzeige auslösen.

9. Druckschalter nach einem der vorhergehenden Ansprüche, **dadurch gekennzeichnet, daß** wenigstens eine Einstell- und/oder Programmiertaste zur Vorgabe von unterschiedlichen Betriebsarten in Abhängigkeit der gespeicherten Druckspeicherwerte (S1, S2) vorgesehen ist.

10. Druckschalter nach Anspruch 9, **dadurch gekennzeichnet, daß** in einer Betriebsart als Schwellwertschalter der Mittelwert der gespeicherten Druckspeicherwerte (S1, S2) als Schaltschwelle vorgebbar ist.

11. Druckschalter nach Anspruch 9 oder 10, **dadurch gekennzeichnet, daß** in einer Betriebsart als Hystereseschalter die beiden gespeicherten Druckspeicherwerte (S1, S2) als Einschalt- und Ausschaltschwelle vorgebbar sind.

12. Druckschalter nach einem der Ansprüche 9 bis 11, **dadurch gekennzeichnet, daß** in einer Betriebsart als Fensterkomparator die beiden gespeicherten Druckspeicherwerte (S1, S2) als Einschalt- und Ausschaltschwellen für das Schaltfenster vorgebbar sind.

13. Druckschalter nach einem der Ansprüche 9 bis 12, **dadurch gekennzeichnet, daß** für die Schaltausgänge (13, 14) wahlweise eine Umschaltung zwischen Öffner-Betrieb und Schließer-Betrieb vorgesehen ist.

14. Druckschalter nach einem der Ansprüche 9 bis 13, **dadurch gekennzeichnet, daß** zur Vorgabe der gewünschten Betriebsart eine Menüführung auf einem Display (15) vorgesehen ist.

## Claims

1. Pressure switch with a pressure port, with an electrical pressure sensor for generating a pressure-dependent electrical signal, with an operating and/or setting device for presetting at least one pressure switching threshold and with at least one electrical switching output, **characterised in that** the pressure switch can be set by operating the operating device (16 - 18), so that the electrical signal corresponding to a momentarily applied pressure (p) is stored as a first stored pressure value (S1) and the electrical signal corresponding to a pressure (p) applied thereafter is stored as a second stored pressure value (S2), these two stored pressure values (S1, S2) predetermining the pressure switching threshold(s) in operation.

2. Pressure switch according to claim 1, **characterised in that** a control button (16 or 17) or a control button combination (16 and 18 or 17 and 18) is provided for storing the stored pressure values (S1, S2).

3. Pressure switch according to claim 2, **characterised in that** the stored pressure values (S1, S2) can be stored by repeated operation of the control buttons (16, 17) or the control button combination (16, 18; 17, 18).

4. Pressure switch according to claim 3, **characterised in that** the first operation is followed by a prompt (25) for a repeat of the operation on a display (15) and/or by an audible and/or visual signal, in particular by a light-emitting diode.

5. Pressure switch according to any of claims 2 to 4, **characterised in that** the control button combination comprises a control button (16 or 17) assigned to each switching output and a programming button (18).

6. Pressure switch according to any of the preceding claims, **characterised in that** it incorporates a plurality of independent switching outputs (13, 14), for each of which two stored pressure values (S1, S2) are provided for storage.

7. Pressure switch according to claim 5, **characterised in that** at least one control button (16, 17) is assigned to each switching output (13, 14).

8. Pressure switch according to any of claims 2 to 7, **characterised in that** the control buttons (16, 17) are additionally designed to trigger the indication / reproduction (28, 30) of the value of the switching threshold(s) of the associated switching output (13, 4) by means of a display (15) or an audible and/or visual signal, in particular a light-emitting diode, whereby in particular different operating modes or different operating combinations with other control buttons trigger the different functions of storage and indication.

9. Pressure switch according to any of the preceding claims, **characterised in that** at least one setting and/or programming button is provided for presetting different modes in dependence on the stored pressure values (S1, S2).

10. Pressure switch according to claim 9, **characterised in that** the average value of the stored pressure values (S1, S2) can be preset as switching threshold in a threshold switch mode.

11. Pressure switch according to claim 9 or 10, **characterised in that** the two stored pressure values (S1, S2) can be preset as switch-on and switch-off threshold in a hysteresis switch mode.

12. Pressure switch according to any of claims 9 to 11, **characterised in that** the two stored pressure values (S1, S2) can be preset as switch-on and switch-off thresholds for the switching window in a window comparator mode.

13. Pressure switch according to any of claims 9 to 12, **characterised in that** a change-over is optionally provided between normally closed operation and normally open operation for the switching outputs (13, 14).

14. Pressure switch according to any of claims 9 to 13, **characterised in that** menu guidance on a display (15) is provided for presetting the desired mode.

## Revendications

1. Interrupteur de pression avec un raccord de pression, avec un capteur électrique de pression destiné à produire un signal électrique dépendant de la pression, avec un dispositif de manoeuvre et/ou réglage pour imposer au moins un seuil de commutation de pression et avec au moins une sortie électrique de commutation, **caractérisé en ce que** l'interrupteur de pression peut être régléen actionnant le dispositif de manoeuvre (16 - 18) de telle manière que le signal électrique correspondant à une pression (p) présente à cet instant est enregistré en tant que première valeur de pression (S1) et le signal électrique correspondant à la pression (p) présenteun instant après est enregistréen tant que deuxième valeur de pression (S2), ces deux valeurs de pression enregistrées(S1, S2) imposant le ou les seuils de commutation de pression en régime de travail.

2. Interrupteur de pression selon la revendication 1, **caractérisé en ce que**, pour enregistrer les deux valeurs de pression (S1, S2), une touche de manoeuvre (16, resp. 17) ou une combinaison de touches de manoeuvre (16 et 18, resp. 17 et 18) est prévue.

3. Interrupteur de pression selon la revendication 2, **caractérisé en ce que** les valeurs de pression (S1, S2) peuvent être enregistrées par un actionnement répété des touches de manoeuvre (16,17) ou des combinaisons de touches de manoeuvre (16, 18; 17, 18).

4. Interrupteur de pression selon la revendication 3, **caractérisé en ce qu'**après un premier actionnement, une demande (25) de nouvel actionnement apparaît sur un affichage (15) ou par un signal acoustique et/ou optique, en particulier celui d'une diode lumineuse.

5. Interrupteur de pression selon l'une des revendications 2 à 4, **caractérisé en ce que** la combinaison de touches de manoeuvre se compose d'une touche de manoeuvre (16 resp. 17) associée à la sortie de commutation respective, et d'une touche de programmation (18).

6. Interrupteur de pression selon l'une des revendications précédentes, **caractérisé en ce qu'**il présente plusieurs sorties de commutation (13, 14) indépendantes les unes des autres, pour lesquelles deux valeurs de pression (S1, S2) sont prévues à chaque fois pour enregistrement.

7. Interrupteur de pression selon la revendication 5, **caractérisé en ce qu'**à chaque sortie de commutation (13, 14) est associée au moins une touche de manoeuvre (16,17).

8. Interrupteur de pression selon l'une des revendications 2 à 7, **caractérisé en ce que** les touches de manoeuvre (16, 17) sont réalisées également pour déclencher l'affichage/la restitution (28, 30) de la valeur du/des seuil(s) de commutation de la sortie de commutation (13, 4) associée au moyen d'un affichage (15) ou d'un signal optique et/ou acoustique, en particulier d'une diode lumineuse, différents types de manoeuvre ou différentes combinaisons de manoeuvre avec d'autres touches de manoeuvre déclenchant en particulier les différentes fonctions de l'enregistrement et de l'affichage.

9. Interrupteur de pression selon l'une des revendications précédentes, **caractérisé en ce qu'**au moins une touche de réglage et/ou programmation est prévue pour imposer les différents modes de fonctionnement en fonction des valeurs de pression (S1, S2) enregistrées.

10. Interrupteur de pression selon la revendication 9, **caractérisé en ce que**, dans un mode de fonctionnement en tant que commutateur de seuil, la valeur moyenne des valeurs de pression enregistrées (S1, S2) peut être imposée comme valeur de seuil.

11. Interrupteur de pression selon la revendication 9 ou 10, **caractérisé en ce que**, dans un mode de fonctionnement en tant que commutateur à hystérèse, les deux valeurs de pression enregistrées (S1, S2) peuvent être imposées en tant que seuil de marche et d'arrêt.

12. Interrupteur de pression selon l'une des revendications 9 à 11, **caractérisé en ce que**, dans un mode de fonctionnement en tant que comparateur à fenêtre, les deux valeurs de pression enregistrées (S1, S2) peuvent être imposées en tant que seuils de marche et d'arrêt pour la fenêtre de commutation.

13. Interrupteur de pression selon l'une des revendications 9 à 12, **caractérisé en ce qu'**il est prévu pour les sorties de commutation (13, 14), au choix, un basculement entre mode ouverture et mode fermeture.

14. Interrupteur de pression selon l'une des revendications 9 à 13, **caractérisé en ce que** pour imposer le mode de fonctionnement souhaité, il est prévu un système de menu sur un affichage (15).
